# EUROPEAN PATENT SPECIFICATION

(11) **EP 2 517 951 B1**
(45) Date of publication and mention of the grant of the patent: **28.09.2016**
(21) Application number: 12165818.1
(22) Date of filing: 26.04.2012
(51) Int. Cl.: B62D 43/02

(54) **A base assembly for spare-tire lock support**
Abstützeinheit für den Verriegelungsträger eines Ersatzrades
Ensemble de base pour le support verrouillant d'une roue de secours

(30) Priority: 29.04.2011 BR 11018950
(43) Date of publication of application: 31.10.2012
(73) Proprietor: Volkswagen do Brasil Indústria de Veiculos Automotores Ltda., 09772-040 Sao Bernardo do Campo (BR)
(72) Inventor: Silva, Edson Soares, 09041-050 Santo Andre, SP (BR); Crepaldi, Denis, 09572-550 Sao Caetano do Sul, SP (BR); Bativa, Maike Martins Bravos, 09850-305 Sao Bernardo do Campo, SP (BR)
(74) Representative: Legg, Cyrus James Grahame

(56) References cited:
- DE-B3-102005 055 808
- GB-A- 2 425 997
- US-A- 1 634 814
- US-A- 2 698 118
- US-A- 4 817 834
- US-A- 4 869 409
- US-A- 5 806 736
- US-B1- 6 929 163

## Description

The present invention relates to a system provided with two devices capable of providing mobility to the positioning between locking components of a spare-tire lock support on a vehicle.

### Description of the prior art

Spare tires or wheels are objects that comprise a wheel provided with its respective tire, which sometimes is smaller than the tire used on the automobile. A spare tire is intended to be used in emergency situations when one of the tires or wheels of a vehicle is damaged and needs to be replaced, so that the automobile can continue to travel.

Spare tires may be housed/stored at different parts of a vehicle. The prior art discloses automobiles with spare tires stored on top of the automobile, on the floor, within the baggage space and, in the case of vehicles with venturous aspect, fastened adjacent the rear door of the vehicle.

When a spare tire is located at the outer back portion of the vehicle, it may be fastened directly to the door portion or coupled to a piece called spare-tire support, a part that overlaps the door without being associated to its surface in a predominant manner. Thus, the spare-tire support generally consists of a metallic arm that pivots on a part of the structure of vehicle body, such as one of the longitudinal ends of the rear bumper. This metallic arm is capable of moving radially away from the center of the rear door by means of a hinge that keeps the support connected to the automobile body.

In order for the spare-tire support not to move inadvertently, locking means capable of keeping the support in a stable position with respect to the rear door or vehicle body are necessary.

As a general rule, the locking devices used on doors, hoods and luggage-space covers are made up of two parts: (i) a static component, usually comprising a pin or ring and (ii) a movable compartment in the form of a lock, which enables one to immobilize the pin or ring by means of hinged parts, springs and/or other accessories. As a rule, many vehicles equipped with a spare tire positioned on an outer rear support use an analogous lock for locking this part.

Both the moveable component and the static component of the lock need fixation bases capable of fixing the structures of the elements to be locked (hereinafter called lockable elements), similarly to the situation between a doorstop and a door.

In the case of automotive vehicles in general and in fastening outer spare tires in particular, the fastening bases are metallic boxes and supports interposed between lockable elements and the lock components, enabling the fixation between these elements by means of screws, rivets and solder.

In short, the lock component, be it moveable or static, is first fastened to a fixation base, which in turn is connected to the element to be locked through secondary appropriate means such as, for example, screws.

In some industrial applications, fixation bases that provide union between a lock component and a door or doorstop, enable relative positioning between lock components. This flexibility is necessary to facilitate the installation of the lock components on both lockable elements, thus making it possible to adjust the positioning between the movable part of the lock and the static part of the lock after fixation thereof to the lockable elements.

It is usual in the prior art to use fixation bases with plates having elongated bores that enable displacement of screws or other fastening elements that provide adjustment in the positioning between fixation base and lockable element. Such embodiments are frequent ion different industrial applications that include, for instance, parts of automotive vehicles such as doors and hoods.

One example of this type of fixation base is the device disclosed in document US 1,634,814, which consists of a lock applicable to doors, hoods and luggage compartments of vehicles, the structure of which exhibits a complex combination of mechanical elements, which enable mobility in positioning this fixation base with respect to the lockable elements.

Such a device comprises a number of forged and perforated metallic plates which, in combination with other parts of different geometry, enable horizontal and vertical displacement of a lock component with respect to the fixation base.

A few objectives achieved with this prior art are reduction in costs and greater simplicity in manufacturing automotive locks. However, such a device does not have a simple configuration capable of enabling easy adaptation of the positioning between the lock components of the vehicle, and is not suitable for application on locks of spare-tire supports.

In the specific case of spare-tire supports of vehicles, there is a great need for a device that will enable flexibility in positioning lock component with respect to the rear door and to the end of the spare-tire support, this device being easy and fast to handle. Such a need for an adjustable positioning lock is present in both assembly/manufacture of the vehicle and vehicle maintenance processes, as can be observed hereinafter.

As far as the drawbacks ion assembly/and manufacture of the vehicle are concerned these problems exist because of the difficulty in achieving an extremely reduced margin in dimensional tolerance in parts and components of automobiles. Such difficulty, in turn, interferes directly with the relative position between the parts and components of vehicles, as well as with the fitting and locking thereof.

In other words, since two corresponding lock components are always installed on different parts of the vehicle, there is always the possibility of these components not achieving an accurate alignment due to said problem of dimensional tolerance encountered in vehicle parts.

On the other hand, the need for a lock provided with la flexible positioning system for spare-tire supports exists not only in the assembly/manufacture of vehicles, but also in the processes of maintaining and using the automobile. This need results from forces and moments which the spare-tire support undergoes while being used.

Due to the elongate length (about 0.5m) and to the high weight of spare tires (which may reach 30Kg), the forces which the spare-tire undergoes while the vehicle is being used are relatively high and may damage the support structure, causing misalignment of the lock component located on the support and the lock component located at the back of the vehicle.

When the spare-tire support comes out of alignment with respect to the rear door of the vehicle, it is necessary to make modifications in the lock components or on the support structure itself, so as to conform these to the new position of the support with respect to the rear door. Such modifications may involve the exchange of damaged components, re-alignment of the support or adaptation in a lock component, with a view to conform the positioning of the lock components to the new opposition of the support with respect to the rear door.

The prior art discloses a prior technique that comprises a fixation base, of flexible positioning, the application of which takes place on spare-tires of automobiles. Document US 4,817,834 discloses a spare-tire support mounted on a rear bumper of a vehicle with a lock mechanism capable of retaining the support at the rear door. The support has, at one of its ends, a hinge that can be coupled to the bumper of the vehicle to enable radial movement thereof. At the opposite end, this support discloses a movable lock component that is connected to a static lock component that, in turn, is fastened to the rear door of the vehicle.

The static lock component, which is hook-shaped, is fastened to the rear door of the vehicle as follow: initially the lock is fastened to a first metallic plate that, in turn, is fastened to a second plate, which is connected to the vehicle door by means of other fastening elements (such as rivets or screws). In a preferred configuration of this prior-art document, the fixation between the plates is carried out by means of screws, which may be displaced between vertical slots located in the second plate, enabling mobility between these objects previous to the effective fixation. This configuration enables one to alter the position of the hook lock with respect to the rear door of the vehicle vertically, with a view to adjust the lock after coupling of the support hinge to the bumper.

However, although this prior technique discloses a fixation base that enables flexibility in positioning the lock component with respect to the vehicle, this device does not disclose a system that enables easy adaptation, or that can be rapidly reconfigured so as to align rapidly the positioning of the lock components as required.

US 4,869,409 discloses a wheel and tire carrier, comprising a base assembly affixed to a door exterior, the base assembly being connected to a swing assembly via a hinge. The swing assembly comprises a swing arm and a pivot end and is able to support a mounted tire. The swing arm may be pivotally displaced to a closed position where the swing arm is nested between and flush with connecting elements of the base assembly. This closed position is retained by a latch pin projecting rearwardly from the swing arm and a latch plate with catch means on the base assembly.

Therefore, it is clear that the previously existing techniques still do not comprise a spare-tire support lock provided with fixation bases that enable flexibility in positioning the lock components with respect to the lockable elements and that can be easily adjusted, not only during the manufacture of the vehicle, but also at any moment, even after its use has begun, with relative simplicity and, ease to handle.

### Objectives of the invention

The present invention has the objective of providing a base assembly for a spare-tire support lock, capable of solving the problem of misalignment between the components of spare-tire support lock, this misalignment preventing the efficient locking of the support on the vehicle structure. The present invention may be used not only during the assembly of the vehicle, but also during commercialization thereof and after its use has begun.

### Brief description of the invention

The objectives of the present invention are achieved by means of a vehicle spare-tire support base assembly comprising a first base device and a second base device, the first base device having at least one protrusion and the second base device having at least two recesses, wherein one of the base devices is associable either to the vehicle frame or to the spare-tire support, the other of the base devices is associable to a lock component, whereas the other lock component is associated to either the spare-tire support or the vehicle frame, and the cooperation of the protrusion with each of the locking recesses imparts a different relative position to the first base device with respect to the second base device, characterized in that the protrusion extends beyond an edge located at one of the ends of the first base device and the second base device has a plurality of recesses linearly arranged on the surface of an inner end, whereby the protrusion may cooperate with any one of the recesses.

### Brief description of the drawing

The present invention will now be described in greater detail with reference to the examples of embodiment represented in the drawings. The figures show:
Figure 1 is a top view of the base assembly of the present invention, disclosing its possible modes of application;
Figure 2 is a perspective view of the second base device of the present invention.
Figure 3 is a perspective view of a longitudinal section of the second base device of the present invention.
Figure 4 is a front view of the second base device of the present invention;
Figure 5 is a top view of the first base device of the present invention;
Figure 6 is a perspective back view of a vehicle provided with a base assembly for a spare-tire support lock according to a preferred embodiment of the present invention;
Figure 7 is a perspective view of the base assembly of the present invention;
Figure 8 is a perspective view of the preferred embodiment of the present invention, disclosing a part of a spare-tire support using the base assembly;
Figure 9 is a side view of a preferred configuration of the present invention, disclosing a part of the spare-tire support using the base assembly.
Figure 10 is a top view of a preferred embodiment of the present invention disclosing a part of a spare-part support using the base assembly.

### Detailed description of the figures

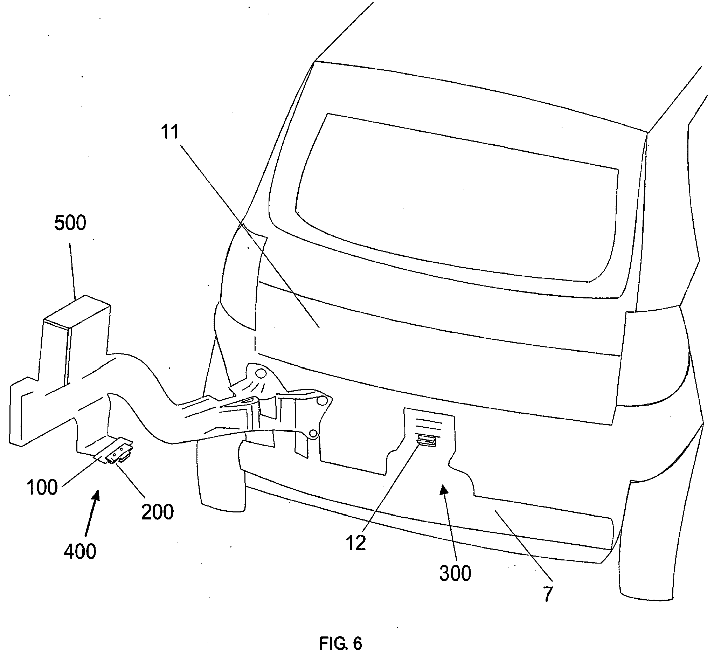

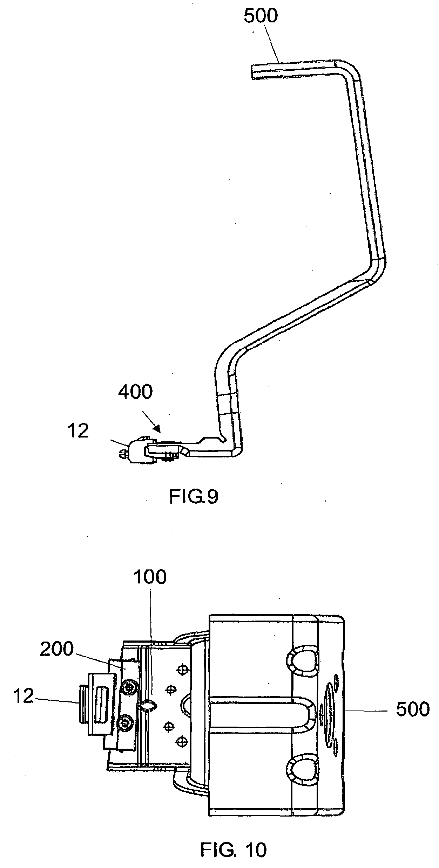

The present invention relates to a mechanism that can be coupled to the spare-tire support 500 or to vehicle frame 300, said vehicle frame 300 comprising a rear door 11 and a rear bumper 7, as shown in figure 6. In one of the preferred embodiments, the mechanism is associated to the spare-tire support 500 (see figures 6, 8, 9 and 10). Hereinafter, such a couplable mechanism is called base assembly 400, being applicable to a lock of a spare-tire support 500.

More particularly, the present invention aims at solving the mentioned problems of the prior art, that is, eliminating the possible failures in alignment between the lock components 12 of the spare-tire support 500.

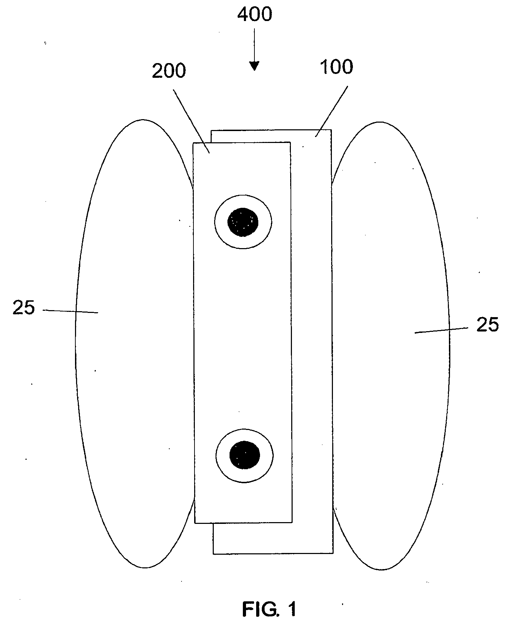

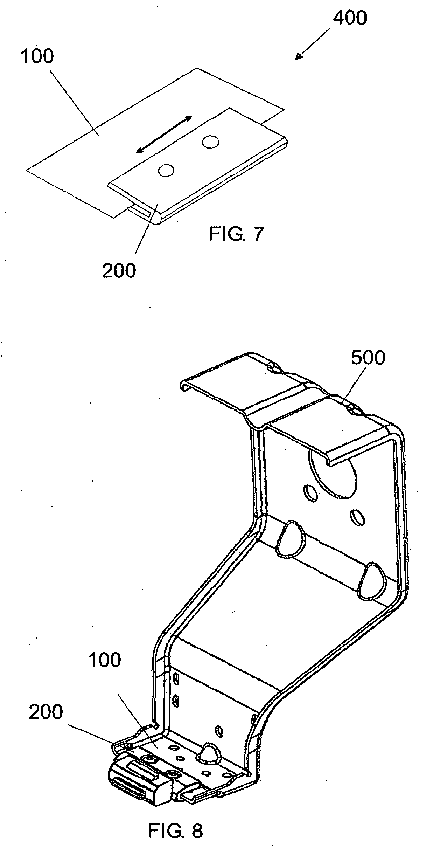

Such difficulties are overcome by the present invention by means of a base assembly 400 (see figures 1 and 7), which comprises two different parts, which are first base device 100 and second base device 200. Such base devices 100, 200 together have the function of intermediating contact between one of the lock components 12 and one of the lockable elements (that is, the spare-tire support 500 or the vehicle frame 300).

First base device 100 is associated to second base device 200 so that this union is made by means of a system that enables mobility of one of the base devices 100, 200 with respect to the other. This mobility has the objective of adjusting the relative positioning between the lock component 12 located on the vehicle frame 300 and the lock component 12 located on the spare-tire support 500.

The first base device 100 is capable of sliding on the second base device 200, for altering the position of a lock component 12 associated to one of the base devices 100, 200, until the latter is aligned with the other lock component 12 associated to the vehicle frame 300 or to the spare-tire support 500. As a result, this component enables adequate locking of the spare-tire support 500 on the vehicle rear, thus solving the problems of alignment of the prior art.

The present invention has various alternative embodiments, based on the same concept. As defined in detail later, the central focus of the present invention is a system associated between two different devices 100 and 200, the joint function of which is to provide mobility to the positioning of one of the lock components 12 involved in the locking of a spare-tire support 500 (see figures 1 and 6).

On the basis of this understanding, one can conceive various different embodiments using this same concept. As defined in figures 1, 8, 9, and 10, both the first base device 100 and the second base device 200 may be associated directly to any member 25, wherein the most relevant ones are:
I. a static lock component 12 (for example, a pin);
II. a moveable lock component 12 (a part of a lock provided with movable parts);
III. vehicle frame 300; or
IV. spare-part support 500.

Among all the suitable possibilities, the only common denominator between the possible embodiments of the present invention, in terms of association between said members 25, is that the first base device 100 must necessarily be associated to the second base device, as defined later.

With regard to the types of associations that may be made between these members 25, the only association defined in detail in this invention is the association between the first base device 100 and the second base device 200. As to the other associations, such as the association between the first base device 100 and the vehicle frame 500 (when this embodiment exists), they are not specified in this specification and may comprise not only the association models already comprised in the prior art (such as rivets, screws, adhesives, solders and clamp), but also any other suitable models capable of performing the same function, as long as they do not modify the main concept presented by this invention.

The invention having been introduced in a generalized manner and a number of different embodiments of the same main concept having been presented, one will now disclose in detail each element of the system of joining the first base device 100 and the second base device 200, that is, the main focus of the present invention.

As disclosed before, the present invention comprises two different devices that, when coupled/associated to each other, enable relative mobility between their structures.

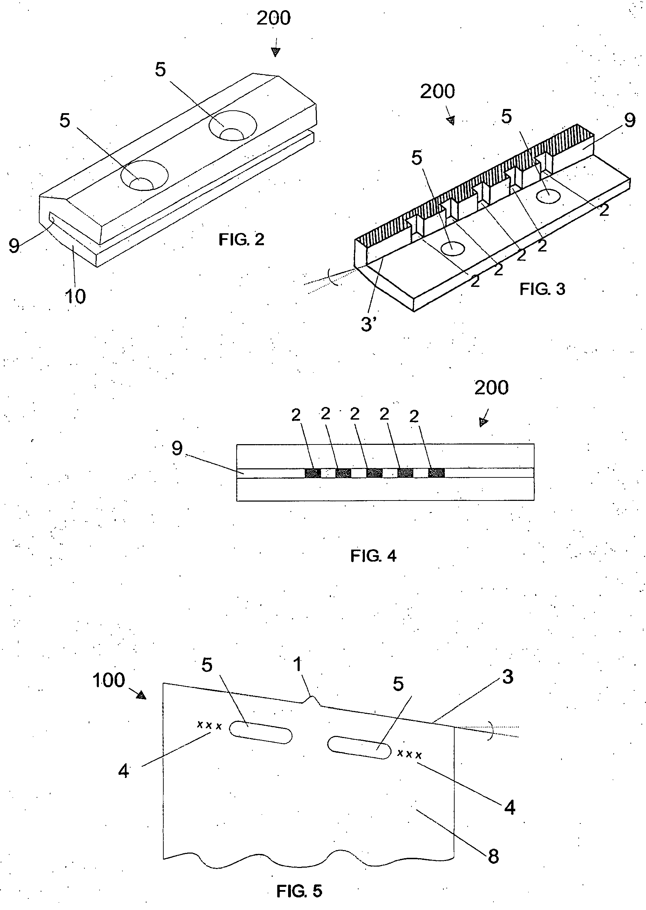

One of these devices, the first base device 100, comprises, preferably but not compulsorily, one flat portion 8 provided with at least one protrusion 1, which extends beyond an edge located at one of its ends (see figure 5). The other device, the second base device 200, has at least one region whose section defines a U-shaped profile having a plurality of recesses 2 corresponding to the protrusion 1 of the first device 100, these recesses 2 being linearly arranged at the inner end 9 of this U-shaped cross-sectional region 10 (see figures 2 and 3 and 4).

The function of the recesses 2 and of the protrusion 1, as reported before, is to provide adjustment in the positioning between the base devices 100, 200 in a specific number of different predetermined positions, the distance between these positions being determined by the separation of the recesses 2 inside the end 9 of the second device 200.

In a preferred embodiment, there are five recesses 2 inside the second base device 200 located at a 0.35mm distance from each other, which thus enables a total displacement of 1.4mm in one of the possible movement directions. Alternatively, the second base device 200 may comprise any number of recesses 2, as long as it is higher than two.

Both base devices 100, 200 are also provided through cavities 5, which enable penetration of through-passing connection elements (preferably screws), which pass through both structures, enabling stable association between them. These connection elements (not shown in the figures) may be any one which can retain the base devices 100, 200 in a constant position, after making the positioning adjustment between these parts.

Without the connection elements, there would be no stability in the relative positioning between the lock components 12 during the normal time of use of the vehicle and support 500. This lack of stability in turn would cause ineffective locking of the spare-tire support 500, which is riot desired. In other words, said connection elements can be loosened when one desires to alter the positioning between the base devices 100, 200 and tightened when the devices 100, 200 reach the desired positioning, resulting in a stable position between the base devices 100, 200 while the vehicle is being used.

Moreover, one should note that both the through cavities 5 of the first base device 100 and the through cavities 5 of the second base device 200 may exhibit substantially rectangular profiles, consisting of elongate shapes, the width of which is in values between the diameter of the screw body and the diameter of the screw head (or another similar connection element). Such through cavities 5, when provided with an elongate shape, enable displacement of the screws inside them, admitting the locking of the base devices 100, 200 in at least two different positions.

In a possible embodiment, the edge of one of the ends of the first base device 100, comprise protrusion 1, define a determined inclination 3, determined by angle α, with the body of this device. Such inclination 3 corresponds to an inclination 3', determined by the same angle α mentioned before, on the surface of the inner end 9 of the second base device 200 (see figures 3 and 5).

Due to this embodiment, provided with inclined elongate elements, the base devices 100, 200, when associated with each other, enable movement not only in a single direction, but also in two different directions, these two movement directions differing by a right angle between them. Thus, when the second base device 200 slides with respect to the first base device 100, they move not only in a transverse direction between their structures, but also in a longitudinal direction.

In another possible embodiment, the fist base device 100 has reference marking 4 on its outer surface, which are disclosed as the second base device 200 displaces on its structure, thus indicating the positioning of the second base device 200 with respect to the first base device 100. It is evident that these reference markings 4 may comprise Arabic or roman figures or any adequate symbols or makings that are capable of indicating the positioning of the first base device 100 with respect to the base device 200, just as in the example of figure 5, represented by characters "x x x" inscribed on the first base device 100.

Finally, one should note that the above-cited characteristics, comprised by the base devices 100, 200, when associated to each other, enable the adjustment of the lock of the spare-tire support 500 so as to conform the positioning between two lock components 12.

Such characteristics are further subject to the following constructive alterations, which do not alter the concept of the present invention, but comprise variations in the physical form of its structures. These alternative characteristics that do not limit the scope of the present invention are only illustrative forms of embodiments, disclosed hereinafter.
I. The first base device 100 may comprise not only a single protrusion 1, but two or more profiles, the function of which in conjunction is the same individual function of the protrusion 1 presented in a unitary arrangement in the preferred embodiment of this invention.
II. The inclinations 3, 3' with their own structures, as long as an inclination 3 will always correspond to the analogous inclination 3', that it, as long as both inclinations 3, 3' define substantially the same angle α (see figures 3 and 5).
III. The space arrangement of the base assembly 400 with respect to the vehicle body can be oriented so as to provide mobility sometimes vertical and sometimes horizontal of the lock components 12. In other words, the base assembly 400 may be arranged on a parallel or perpendicular plane relative to the reference plane that defines the vehicle chassis.

It should be further noted that the base assembly 400 of the present invention can be used not only during the manufacture of the vehicle at an assembly line, but also at a concessionaire or even at a maintenance process carried out after purchase of the vehicle. This characteristic evidences the usefulness of the devices of the present invention not only during the processes of manufacturing the vehicle, but also during the commercialization thereof and throughout its whole useful life, thus eliminating definitively the problems that existed before.

Preferred example of embodiment having been described, one should understand that the scope of the present invention embraces other possible variations, being limited only by the contents of the accompanying claims, which include the possible equivalents.

## Claims

1. A vehicle spare-tire support (500) base assembly (400) comprising a first base device (100) and a second base device (200), the first base device (100) having at least one protrusion (1) and the second base device (200) having at least two recesses (2), wherein:
- one of the base devices (100 and 200) is associable either to a vehicle frame (300) or to the spare-tire support (500), the other of the base devices (200 and 100) is associable to a lock component (12), whereas the other lock component (12) is associated to either the spare-tire support (500) or the vehicle frame (300); and
- the cooperation of the protrusion (1) with each of the locking recesses (2) imparts a different relative position of the first base device (100) with respect to the second base device (200);
**characterized in that**:
the protrusion (1) extends beyond an edge located at one of the ends of the first base device (100) and the second base device (200) has a plurality of recesses (2) linearly arranged on the surface of an inner end (9), whereby the protrusion (1) may cooperate with any one of the recesses (2).

2. A base assembly (400) according to claim 1, **characterized in that** the base device (200) has a U-shaped cross-sectional region (10).

3. A base assembly (400) according to claim 1 or claim 2, **characterized in that** the end (3) of the first base that contains the protrusion (1) and the surface (3') of the inner end (9) are both inclined and match when the base devices (100, 200) cooperate with each other.

4. A base assembly (400) according to any one of claims 1 to 3, **characterized in that** the first base device (100) and/or the second base device (200) is provided with at least two through cavities (5) of substantially rectangular shape, capable of enabling displacement of screws inside them.

5. A base assembly (400) according to any one of claims 1 to 4, **characterized in that** the first base device (100) comprises, on its outer surface, reference markings (4) indicating the positioning of the first base device (100) with respect to the second base device (200).

6. A base assembly (400) according to any one of claims 1 to 5, **characterized by** being configured to enable vertical adjustment in the positioning of the lock components (12).

7. A base assembly (400) according to any one of claims 1 to 6, **characterized by** being configured to enable horizontal adjustment in the positioning of the lock components (12),

## Patentansprüche

1. Basisanordnung (400) für einen Träger (500) eines Fahrzeug-Reserverades, mit einer ersten Basisvorrichtung (100) und einer zweiten Basisvorrichtung (200), wobei die erste Basisvorrichtung (100) zumindest einen Vorsprung (1) und die zweite Basisvorrichtung (200) zumindest zwei Ausnehmungen (2) aufweist, wobei:
- eine der Basisvorrichtungen (100 und 200) mit einem Fahrzeugrahmen (300) oder dem Träger (500) für das Reserverad verbindbar ist, die andere der Basisvorrichtungen (200 und 100) mit einem Verriegelungsbauteil (12) verbindbar ist, während das andere Verriegelungsbauteil (12) mit dem Träger (500) für das Reserverad oder dem Fahrzeugrahmen (300) verbunden ist; und
- das Zusammenwirken des Vorsprungs (1) mit jeder der Verriegelungsausnehmungen (2) eine unterschiedliche relative Position der ersten Basisvorrichtung (100) bezüglich der zweiten Basisvorrichtung (200) ergibt;
**dadurch gekennzeichnet, dass**:
der Vorsprung (1) sich über einen Rand hinaus erstreckt, der sich an einem der Enden der ersten Basisvorrichtung (100) befindet, und die zweite Basisvorrichtung (200) eine Mehrzahl an Ausnehmungen (2) aufweist, die an der Oberfläche eines inneren Endes (9) linear angeordnet sind, wodurch der Vorsprung (1) mit einer beliebigen der Ausnehmungen (2) zusammenwirken kann.

2. Basisanordnung (400) nach Anspruch 1, **dadurch gekennzeichnet, dass** die Basisvorrichtung (200) einen U-förmigen Querschnittsbereich (10) aufweist.

3. Basisanordnung (400) nach Anspruch 1 oder Anspruch 2, **dadurch gekennzeichnet, dass** sowohl das Ende (3) der ersten Basis, die den Vorsprung (1) enthält, als auch die Oberfläche (3') des inneren Endes (9) geneigt sind und zusammenpassen, wenn die Basisvorrichtungen (100, 200) miteinander zusammenwirken.

4. Basisanordnung (400) nach irgendeinem der Ansprüche 1 bis 3, **dadurch gekennzeichnet, dass** die erste Basisvorrichtung (100) und/oder die zweite Basisvorrichtung (200) mit zumindest zwei durchgehenden Hohlräumen (5) von im Wesentlichen rechteckiger Form versehen ist, die dazu geeignet sind, eine Verschiebung von Schrauben in ihnen zu ermöglichen.

5. Basisanordnung (400) nach irgendeinem der Ansprüche 1 bis 4, **dadurch gekennzeichnet, dass** die erste Basisvorrichtung (100) an ihrer äußeren Oberfläche Referenzmarkierungen (4) aufweist, die die Positionierung der ersten Basisvorrichtung (100) bezüglich der zweiten Basisvorrichtung (200) anzeigen.

6. Basisanordnung (400) nach irgendeinem der Ansprüche 1 bis 5, **gekennzeichnet durch** eine Ausgestaltung, die eine vertikale Einstellung in der Positionierung der Verriegelungsbauteile (12) ermöglicht.

7. Basisanordnung (400) nach irgendeinem der Ansprüche 1 bis 6, **gekennzeichnet durch** eine Ausgestaltung, die eine horizontale Einstellung in der Positionierung der Verriegelungsbauteile (12) ermöglicht.

## Revendications

1. Ensemble de base (400) de support d'une roue de secours de véhicule (500) comprenant un premier dispositif de base (100) et un second dispositif de base (200), le premier dispositif de base (100) présentant au moins une saillie (1) et le second dispositif de base (200) présentant au moins deux évidements (2), dans lequel :
- un des dispositifs de base (100 et 200) est associable soit à un cadre de véhicule (300) ou au support de la roue de secours (500), l'autre des dispositifs de base (200 et 100) est associable à un composant de verrouillage (12), alors que l'autre composant de verrouillage (12) est associé soit au support de la roue de secours (500) ou au cadre de véhicule (300) ; et
- la coopération de la saillie (1) avec chacun des évidements de verrouillage (2) donne une position relative différente du premier dispositif de base (100) par rapport au second dispositif de base (200) ;
**caractérisé en ce que** :
la saillie (1) s'étend au-delà d'une arête située sur l'une des extrémités du premier dispositif de base (100) et le second dispositif de base (200) présente une pluralité d'évidements (2) agencés linéairement sur la surface d'une extrémité intérieure (9), de sorte que la saillie (1) peut coopérer avec n'importe lequel des évidements (2).

2. Ensemble de base (400) selon la revendication 1, **caractérisé en ce que** le dispositif de base (200) présente une région de section transversale en U (10).

3. Ensemble de base (400) selon la revendication 1 ou la revendication 2, **caractérisé en ce que** l'extrémité (3) de la première base qui contient la saillie (1) et la surface (3') de l'extrémité intérieure (9) sont toutes deux inclinées et correspondent lorsque les dispositifs de base (100, 200) coopèrent l'un avec l'autre.

4. Ensemble de base (400) selon l'une quelconque des revendications 1 à 3, **caractérisé en ce que** le premier dispositif de base (100) et/ou le second dispositif de base (200) sont dotés d'au moins deux cavités débouchantes (5) de forme sensiblement rectangulaire, aptes à permettre le déplacement de vis à l'intérieur d'elles.

5. Ensemble de base (400) selon l'une quelconque des revendications 1 à 4, **caractérisé en ce que** le premier dispositif de base (100) comprend sur sa surface extérieure, des marquages de référence (4) indiquant le positionnement du premier dispositif de base (100) par rapport au second dispositif de base (200).

6. Ensemble de base (400) selon l'une quelconque des revendications 1 à 5, **caractérisé en ce qu'**il est configuré pour permettre l'ajustement vertical dans le positionnement des composants de verrouillage (12).

7. Ensemble de base (400) selon l'une quelconque des revendications 1 à 6, **caractérisé en ce qu'**il est configuré pour permettre l'ajustement horizontal dans le positionnement des composants de verrouillage (12).
